# EUROPEAN PATENT APPLICATION

(11) **EP 3 355 189 A1**
(43) Date of publication of application: **01.08.2018**
(21) Application number: 16848047.3
(22) Date of filing: 14.09.2016
(51) Int. Cl.: G06F 9/50

(54) **DATA SYNCHRONIZATION METHOD AND SYSTEM**

(30) Priority: 24.09.2015 CN 201510617820
(71) Applicant: Alibaba Group Holding Limited, Grand Cayman (KY)
(72) Inventor: LIU, Yi, Hangzhou Zhejiang 311121 (CN)
(74) Representative: Finnegan Europe LLP
(86) International application number: PCT/CN2016/098960
(87) International publication number: WO 2017/050165

(57) **Abstract**

Embodiments of the present application provide a data synchronization method and system to solve the synchronization failure problem in data synchronization. The method includes: assigning a task for each data fragment in a to-be-processed data set respectively; starting a task thread of the task, and executing offline data synchronization of the corresponding data fragment between a source end and a destination end; after it is judged that a task corresponding to any data fragment is failed in synchronization and if it is determined that the failed task supports a failover operation, clearing processing resources of the data fragment corresponding to the failed task; and reassigning a task for the data fragment corresponding to the failed task, and starting a task thread of the reassigned task to execute offline data synchronization of the data fragment between the source end and the destination end. The data fragment of the failed task is directly resynchronized, and it is unnecessary to reprocess the whole to-be-processed data set, thereby saving resources and shortening the synchronization time.

## Description

### Technical Field

The present application relates to the field of data processing technologies, and in particular, to a data synchronization method and a data synchronization system.

### Background Art

With the development of network technologies, interactions between different databases or file systems are ever increasing. However, there are various types of databases and file systems, and therefore, data reading and writing between different types of databases/file systems generally occur.

When data reading and writing are performed between a number of different types of databases/file systems, that is, when data is imported and exported, offline synchronization needs to be executed sometimes. It takes a long period to perform offline synchronization, and the synchronization process heavily depends on the reliability of a source end, an execution gateway, a destination end, and the like. In the synchronization process, one task may be divided into multiple task fragments for processing. However, if a fragment is failed in synchronization, the whole task will be failed, and synchronization results of other fragments will not be reserved.

If the above fragment synchronization failure occurs, it is generally necessary to reprocess the whole task, wasting resources and affecting the operating time.

Therefore, a technical problem that urgently needs to be solved by those skilled in the art at present is to provide a data synchronization method and system, so as to solve the above problem of synchronization failure in data synchronization.

### Summary of the Invention

The technical problem to be solved in embodiments of the present application is to provide a data synchronization method to solve the above problem of synchronization failure in data synchronization.

Correspondingly, the embodiments of the present application further provide a data synchronization system to ensure implementation and application of the above method.

To solve the above problem, the present application discloses a data synchronization method, including: assigning a task for each data fragment in a to-be-processed data set respectively; starting a task thread of the task, and executing offline data synchronization of the corresponding data fragment between a source end and a destination end; after it is judged that a task corresponding to any data fragment is failed in synchronization and if it is determined that the failed task supports a failover operation, clearing processing resources of the data fragment corresponding to the failed task; and reassigning a task for the data fragment corresponding to the failed task, and starting a task thread of the reassigned task to execute offline data synchronization of the data fragment between the source end and the destination end.

Optionally, the determining that the failed task supports a failover operation includes: when it is judged that a read/write feature of the destination end meets a failover condition, determining that the failed task supports a failover operation.

Optionally, the method further includes: when the read/write feature of the destination end is a temporary synchronization feature or an idempotent feature, judging that the read/write feature of the destination end meets the failover condition, wherein the temporary synchronization feature includes a feature of: writing synchronization data into a temporary region in a synchronization process, and after the synchronization is completed, validating the synchronization data after the synchronization data in the temporary region is moved into a fixed storage region through an operation instruction; and the idempotent feature includes that a data writing operation supports an idempotent operation.

Optionally, the clearing processing resources of the data fragment corresponding to the failed task includes: releasing resources of the task thread corresponding to the failed task, and deleting statistical data of the data fragment corresponding to the failed task.

Optionally, the task thread includes a read thread and a write thread; and the releasing resources of the task thread corresponding to the failed task includes: clearing synchronization data stored in data buffers corresponding to the read thread and the write thread; and canceling occupation of the read thread and the write thread by the failed data fragment.

Optionally, before the clearing processing resources of the data fragment corresponding to the failed task, the method further includes: stopping the task thread from executing offline data synchronization between the source end and the destination end.

Optionally, the method further includes: when there is any piece of abnormal information, feeding back processing failure information, wherein the abnormal information includes: source end abnormal information, destination end abnormal information, network abnormal information, and task thread abnormal information; and judging, according to the processing failure information, that a task corresponding to the abnormal situation is failed in synchronization.

The embodiments of the present application further disclose a data synchronization system, including: a task assignment module configured to assign a task for each data fragment in a to-be-processed data set respectively, and reassign a task for a data fragment corresponding to a failed task; a data synchronization module configured to start a task thread of the task, execute offline data synchronization of the corresponding data fragment between a source end and a destination end, and start a task thread of the reassigned task to execute offline data synchronization of the data fragment between the source end and the destination end; and a failover module configured to, after it is judged that a task corresponding to any data fragment is failed in synchronization and if it is determined that the failed task supports a failover operation, clear processing resources of the data fragment corresponding to the failed task, and trigger the task assignment module.

Optionally, the failover module includes a failover support judgment sub-module configured to, when it is judged that a read/write feature of the destination end meets a failover condition, determine that the failed task supports a failover operation.

Optionally, the failover support judgment sub-module is further configured to, when the read/write feature of the destination end is a temporary synchronization feature or an idempotent feature, judge that the read/write feature of the destination end meets the failover condition, wherein the temporary synchronization feature includes a feature of: writing synchronization data into a temporary region in a synchronization process, and after the synchronization is completed, validating the synchronization data after the synchronization data in the temporary region is moved into a fixed storage region through an operation instruction; and the idempotent feature includes that a data writing operation supports an idempotent operation.

Optionally, the failover module includes a resource clearing sub-module configured to release resources of the task thread corresponding to the failed task, and delete statistical data of the data fragment corresponding to the failed task.

Optionally, the resource clearing sub-module is configured to clear synchronization data stored in data buffers corresponding to a read thread and a write thread; and cancel occupation of the read thread and the write thread by the data fragment corresponding to the failed task.

Optionally, the resource clearing sub-module is further configured to stop execution of offline data synchronization between the source end and the destination end by the task thread.

Optionally, the system further includes a failure determination module configured to, when there is any piece of abnormal information, feed back processing failure information, wherein the abnormal information includes: source end abnormal information, destination end abnormal information, network abnormal information, and task thread abnormal information; and judge, according to the processing failure information, that a task corresponding to the abnormal situation is failed in synchronization.

Compared with the prior art, the embodiments of the present application have the following advantages:
In the embodiments of the present application, a task is assigned for each data fragment of a to-be-processed data set respectively, a task thread of the task is started, and offline data synchronization of the corresponding data fragment is executed between a source end and a destination end. If it is judged that a task corresponding to any data fragment is failed in synchronization and it is determined that the failed task supports a failover operation, that is, task-level failover can be executed, processing resources of the data fragment corresponding to the failed task are cleared, a task is reassigned for the data fragment corresponding to the failed task, and a task thread of the reassigned task is started to execute offline data synchronization of the data fragment between the source end and the destination end. Therefore, the data fragment of the failed task is directly resynchronized, and it is unnecessary to reprocess the whole to-be-processed data set, thereby saving resources and shortening the synchronization time.

### Brief Description of the Drawings

FIG. 1 is a flowchart of steps of an embodiment of a data synchronization method according to the present application;
FIG. 2 is a flowchart of steps of another embodiment of a data synchronization method according to the present application;
FIG. 3 is a structural block diagram of an embodiment of a data synchronization system according to the present application; and
FIG. 4 is a structural block diagram of another embodiment of a data synchronization system according to the present application.

### Detailed Description

To make the above objectives, features and advantages of the present application more apparent and comprehensible, the present application is further described in detail through the accompanying drawings and specific implementations.

One of core concepts of embodiments of the present application is to provide a data synchronization method and system to solve the synchronization failure problem in data synchronization. A task is assigned for each data fragment of a to-be-processed data set respectively, a task thread of the task is started, and offline data synchronization of the corresponding data fragment is executed between a source end and a destination end. If it is judged that a task corresponding to any data fragment is failed in synchronization and it is determined that the failed task supports a failover operation, that is, task-level failover can be executed, processing resources of the data fragment corresponding to the failed task are cleared, a task is reassigned for the data fragment corresponding to the failed task, and a task thread of the reassigned task is started to execute offline data synchronization of the data fragment between the source end and the destination end. Therefore, when the synchronization of the data fragment is failed, the task-level failover is executed, that is, the failed data fragment is resynchronized, and it is unnecessary to reprocess the to-be-processed data set, thereby saving resources and shortening the synchronization time.

### Embodiment 1

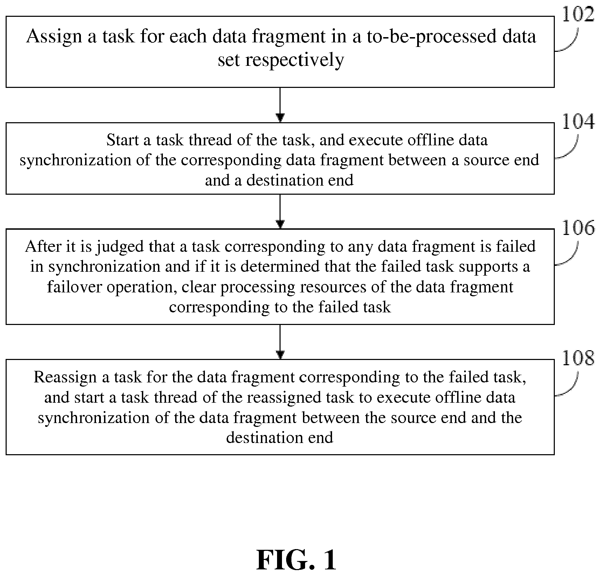

Referring to FIG. 1, a flowchart of steps of an embodiment of a data synchronization method of the present application is shown, which may specifically include the following steps:
Step 102: A task is assigned for each data fragment in a to-be-processed data set respectively.
Step 104: A task thread of the task is started, and offline data synchronization of the corresponding data fragment is executed between a source end and a destination end.

When offline data synchronization is carried out between different databases/file systems, a data set to be synchronized is used as a to-be-processed data set. A source end and a destination end of the offline data synchronization may be set. A database/file system where the to-be-processed data set is located is used as the source end, and a database/file system to which the to-be-processed data set is to be synchronized is used as the destination end. The to-be-processed data set may be considered as a set of business data, including a large amount of business data. Therefore, before offline synchronization is carried out on the to-be-processed data set, in this embodiment, the to-be-processed data set may be divided into several data fragments in advance. A main thread executing the data synchronization establishes multiple tasks, and assigns a data fragment for each task, that is, each data fragment corresponds to one task. Each task corresponds to a corresponding task thread, and therefore, a corresponding task thread is started respectively for each data fragment of the to-be-processed data set, and multiple task threads are used synchronously to execute offline data synchronization between the source end and the destination end, that is, data reading and writing operations are carried out between the source end and the destination end.

Step 106: After it is judged that a task corresponding to any data fragment is failed in synchronization and if it is determined that the failed task supports a failover operation, processing resources of the data fragment corresponding to the failed task are cleared.

Step 108: A task is reassigned for the data fragment corresponding to the failed task, and a task thread of the reassigned task is started to execute offline data synchronization of the data fragment between the source end and the destination end.

In the process that the task thread carries out the offline data synchronization on the data fragment, the task may be failed in synchronizing the data fragment due to various reasons such as an unstable network, and a timeout of writing data to the destination end. Therefore, after it is judged that a task corresponding to any data fragment is failed in synchronization, for the failed task, it is determined whether the failed task supports a failover operation. The failover refers to failover of a database, an application service, a hardware device, and the like in the field of computers, and is a backup operation mode. When a task is failed in processing due to some reasons, the data fragment may be moved to another component (such as a node, a progress, or a thread) for reprocessing. In this embodiment, whether the failed data fragment supports the failover operation may be determined according to an attribute of the destination end.

When the task failed in synchronization is determined and it is determined that the failed task supports the failover operation, the data fragment corresponding to the failed task may be moved to another task thread for reprocessing. Before the data fragment corresponding to the failed task is moved, in order to avoid that one data fragment is processed by two task threads simultaneously, processing resources corresponding to the data fragment corresponding to the failed task may be cleared first, such as releasing the task thread occupied by the data fragment.

After the processing resources corresponding to the failed data fragment are cleared, a task thread may be reassigned for the failed data fragment, and the reassigned task thread executes offline data synchronization of the data fragment between the source end and the destination end, that is, carrying out offline data reading and writing operations between the source end and the destination end.

In view of the above, a task is assigned for each data fragment of a to-be-processed data set respectively, a task thread of the task is started, and offline data synchronization of the corresponding data fragment is executed between a source end and a destination end. If it is judged that a task corresponding to any data fragment is failed in synchronization and it is determined that the failed task supports a failover operation, that is, task-level failover can be executed, processing resources of the data fragment corresponding to the failed task are cleared, a task is reassigned for the data fragment corresponding to the failed task, and a task thread of the reassigned task is started to execute offline data synchronization of the data fragment between the source end and the destination end. Therefore, the data fragment of the failed task is directly resynchronized, and it is unnecessary to reprocess the to-be-processed data set, thereby saving resources and shortening the synchronization time.

### Embodiment 2

On the basis of the above embodiment, this embodiment describes a failover-based offline data synchronization operation in detail.

The offline data synchronization of the embodiment of the present application may be applied to offline synchronization of datax, wherein datax is a tool for exchanging data at a high speed between heterogeneous databases/file systems, implementing data exchange between any data processing systems (such as RDBMS/Hdfs/Local filesystem).

DataX has the following features: DataX exchanges data at a high speed between heterogeneous databases/file systems. DataX is constructed by using Framework + plug-in architecture, wherein the Framework processes most technical problems in high-speed data exchange such as buffer, flow control, concurrence, and context loading, and provides a simple interaction between an interface and a plug-in, while the plug-in merely needs to implement access to a data processing system. A running mode of DataX is stand-alone; the data transmission process is implemented in a single progress, all operations are performed in a memory, no magnetic disk is read or written, and there is no IPC either. DataX has an open frame, and a developer can develop a new plug-in within a very short time to support a new database/file system quickly. Therefore, the offline data synchronization operation is described in detail by taking an example in which offline synchronization is executed by datax.

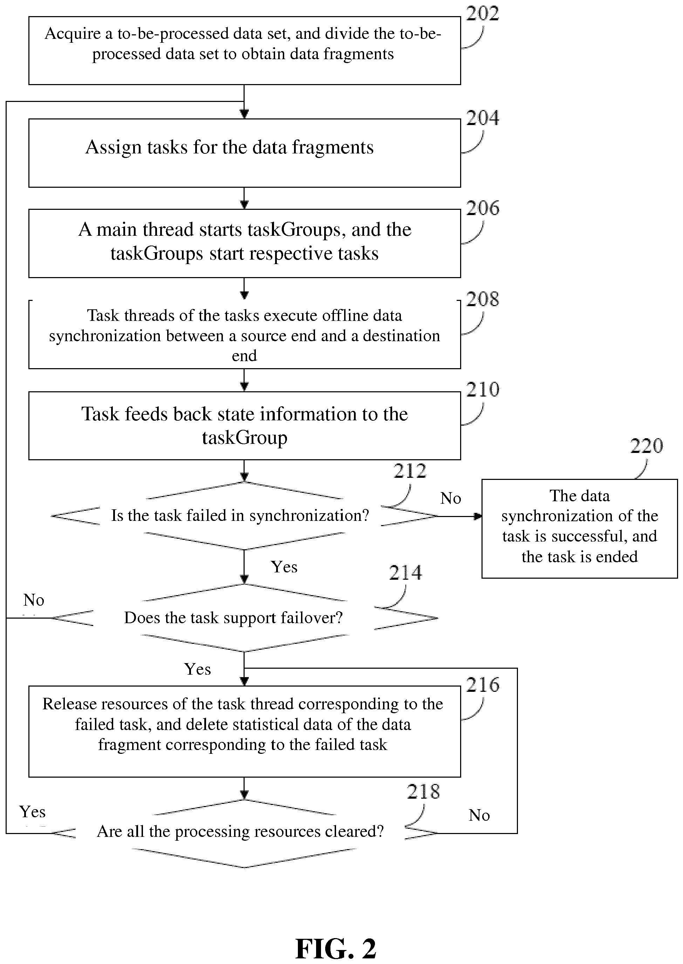

Referring to FIG. 2, a flowchart of steps of another embodiment of a data synchronization method of the present application is shown, which may specifically include the following steps:
Step 202: A to-be-processed data set is acquired, and the to-be-processed data set is divided to obtain data fragments.
Step 204: Tasks are assigned for the data fragments.
Step 206: A main thread starts taskGroups, and the taskGroups start respective tasks.
Step 208: Offline data synchronization is executed between a source end and a destination end by task threads of the tasks.

Before the offline data synchronization is carried out between the source end and the destination end, a to-be-processed data set is determined first, and the to-be-processed data set is divided into several data fragments to improve the efficiency of the offline synchronization. In this embodiment, the main thread executing the offline data synchronization establishes multiple taskGroups, and multiple tasks are established in each taskGroup. Therefore, the offline data synchronization may be executed in a taskGroup manner. That is, a task is assigned for each data fragment, and a synchronization processing is carried out by using a task thread of the task. After assignment for the data fragment is completed, the main thread starts respective taskGroups, the taskGroups start respective tasks, and task threads of the tasks each execute offline data synchronization between the source end and the destination end.

The task thread includes a read thread and a write thread. The read thread is used for reading data, and the write thread is used for writing data. The main thread further assigns a data buffer for each task, for storing read and written data temporarily. Therefore, when the offline data synchronization is carried out, data reading and data writing are executed between the source end and the destination end through the read thread and the write thread respectively. Moreover, the data may be stored in a data buffer temporarily, thereby implementing the offline data synchronization.

Step 210: Each task feeds back state information to the respective taskGroup.

Step 212: It is determined whether the task is failed in synchronization according to the state information.

When a task carries out data synchronization on the data fragment, the task will collect state information thereof and feed the state information back to the taskGroup. The state information includes a processing result of the offline data synchronization on the data fragment. That is, the task will notify the taskGroup whether offline synchronization is successfully processed. A processing success message may be fed back if the processing is successful, and a processing failure message is fed back if the processing is failed. Therefore, it may be determined that the processing is failed according to the processing failure information in the state information.

In the embodiment of the present application, when there is any piece of abnormal information, processing failure information is fed back, wherein the abnormal information includes: source end abnormal information, destination end abnormal information, network abnormal information, and task thread abnormal information; and it is judged, according to the processing failure information, that the task corresponding to the abnormal situation is failed in synchronization.

When the offline data synchronization is carried out between the source end and the destination end, the task may be failed due to an error in any step of the whole synchronization process. Therefore, corresponding processing failure information will be generated when abnormal information occurs because of any of the following situations, and the abnormal information includes:
source end abnormal information, that is, abnormal information generated due to a source end abnormality, e.g., a data source being unavailable due to jitter;
destination end abnormal information, that is, abnormal information generated due to a destination end abnormality, e.g., the source end being closed due to a connection timeout because of slow writing to the destination end;
network abnormal information, that is, abnormal information generated due to a network abnormality, e.g., network interruption; and
task thread abnormal information, that is, abnormal information generated due to a task thread abnormality, e.g., a thread error.

The task will generate corresponding processing failure information when the above abnormality occurs. The task adds the processing failure information to the state information and feeds back the state information to the taskGroup. The taskGroup judges, according to the processing failure information, that the task corresponding to the abnormal situation is failed in synchronization.

If yes, that is, it is determined that the synchronization is failed according to the state information, step 214 is performed; if no, that is, it is determined that the synchronization is successful according to the state information, step 220 is performed.

Step 214: It is judged whether the failed task supports failover according to a read/write feature of the destination end.

In this embodiment, for the failed task supporting the failover, the data fragment corresponding to the failed task may be resynchronized, that is, reprocessing on the data fragment that is failed in synchronization is supported. Therefore, it is unnecessary to resynchronize the whole to-be-processed data set, thus saving resources and the synchronization time.

Whether the failed task can execute failover depends on the read/write feature of the destination end, wherein when the read/write feature of the destination end is a temporary synchronization feature or an idempotent feature, it may be judged that the read/write feature of the destination end meets a failover condition, that is, the failed task supports the failover.

### 1) Temporary synchronization feature

The temporary synchronization feature includes a feature of: writing synchronization data into a temporary region in a synchronization process, and after the synchronization is completed, validating the synchronization data after the synchronization data in the temporary region is moved into a fixed storage region through an operation instruction.

That is, during execution of data synchronization between the source end and the destination end, when synchronization data is written into the destination end, the synchronization data is first written into a temporary area (i.e., a temporary buffer) for buffering. When synchronization of a data fragment is completed, the destination end will send an operation execution instruction, i.e., commit instruction, and then the synchronization data in the temporary area is moved to an actual production region, i.e., a fixed storage area, according to the commit instruction. The synchronization data becomes valid after the moving is completed.

For a destination end having the above feature, if the task is failed, the destination end may execute failover without sending a commit instruction, that is, a task is re-initiated to synchronize data to a new temporary area, while it is unnecessary to pay attention to the synchronization data in the temporary area corresponding to the failed task, because the destination end will automatically clear the synchronization data in the temporary area corresponding to the failed task, and the synchronization data will not be applied to production and will not be valid. Therefore, if the data is synchronized to the destination end having the temporary synchronization feature, the corresponding failed task can support failover.

### 2) Idempotent feature

The idempotent feature is a feature that a data writing operation supports an idempotent operation. That is, synchronization data of the destination end is written in an idempotent manner, that is, the effect of multiple times of execution is the same as the effect of execution once. That is, if writing is executed for multiple times in the process of data synchronization, data written later will overwrite the previous data, and the problem of data duplication will not occur. If the destination end has the idempotent feature, the corresponding task supports failover.

The above offline synchronization is applied to the datax, and when the task is failed, it is accurately judged whether the task can support failover. Different plug-ins have different judgment standards. When the destination end is an odpswriter or mysqlwirter system, a writing mode thereof is a replace mode, that is, the writing operation is idempotent. Therefore, the destination end supports failover. For another example, the destination end in a put mode of tairwriter can also support task failover. When the destination end is odpsWriter, no commit instruction is fed back in the data synchronization process, and synchronization data written to the destination end is in the temporary area, that is, the data is not valid; therefore, failover can be executed.

Therefore, when it is judged whether a failed task supports failover according to the writing feature of the destination end, a supportFailover method may be implemented in the writer of the task, "true" or "false" is returned according to the writing feature of the current destination end and a synchronization progress, to inform the taskGroup of whether the task supports failover or not. If yes, that is, it is judged that the failed task supports failover, step 216 is performed; if no, that is, it is judged that the failed task does not support failover, the procedure returns to step 204 to resynchronize the to-be-processed data set.

Step 216: Resources of the task thread corresponding to the failed task are released, and statistical data of the data fragment corresponding to the failed task is deleted.

The taskGroup finds that the task is failed and judges that the failed task supports failover, then the task thread of the failed task is interrupted, and statistical data is cleared. Resources of the task thread corresponding to the failed task may be released, that is, the task thread corresponding to the failed task stops external reading and writing operations. Moreover, statistical data of the data fragment corresponding to the failed task is deleted. For example, the number of synchronization records, the amount of synchronization data, and the like of the data fragment are cleared.

In an optional embodiment of the present application, the releasing resources of the task thread corresponding to the failed task includes: clearing synchronization data stored in data buffers corresponding to the read thread and the write thread; and canceling occupation of the read thread and the write thread by the data fragment corresponding to the failed task.

The task thread uses the read thread to execute a reading operation of the synchronization data, and uses the write thread to execute a writing operation of the synchronization data. When resources of the task thread are released, the current reading and writing operations of the read thread and the write thread may be stopped, synchronization data stored in data buffers corresponding to the read thread and the write thread are cleared, and occupation of the read thread and the write thread by the data fragment corresponding to the failed task is canceled, such that the data fragment is not processed by the task thread any longer.

Step 218: It is determined whether all the processing resources of the data fragment corresponding to the failed task are cleared.

In actual processing, when the task is failed in synchronization, it is necessary to release all the processing resources of the task, to ensure that the failed task has been terminated when the failover is executed and a reassigned task executes synchronization, and ensure that the same data fragment will not be processed by two tasks simultaneously. Moreover, after the statistical data is cleared, statistics on data can be made again when the reassigned task executes synchronization. Therefore, it should be ensured that all the resources of the failed task have been released, guaranteeing that data finally written into the destination end is not lost or repeated. Resources can be cleared by interrupting the read and write threads of the failed task and by setting memory channels that need to be operated by the read and write threads to be invalid. The taskGroup will reassign a task for the data fragment and start the reassigned task to execute the data synchronization only after determining that the failed task has stopped completely.

Therefore, after completing clearing of the processing resources, the failed task will report to the TaskGroup whether its read and write threads have been ended and whether memory resources have been released. Therefore, the TaskGroup will determine, on the basis of the feedback of the failed task, whether clearing of the processing resources is finished.

If yes, that is, the clearing of the processing resources is finished, step 204 is performed; if no, that is, the clearing of the processing resources is not finished, step 216 is performed to continue to clear resources.

After the clearing of the processing resources is finished, failover may be executed for the failed task. Therefore, the procedure returns to step 204 to reassign a task for the data fragment corresponding to the failed task. The reassigned task is used to carry out data synchronization on the data fragment failed in synchronization, till the data synchronization succeeds, and the task is ended.

Step 220: The data synchronization of the task is successful, and the task is ended.

It is determined that the data synchronization of the task succeeds in synchronization according to the state information, and the task is ended.

Therefore, when the task corresponding to the data fragment is failed in processing, after it is determined that the failed task supports failover on the basis of the read/write feature of the destination end, the failover may be executed, that is, a task is reassigned for the data fragment to re-execute the synchronization. Therefore, the task-level failover is executed, and it is unnecessary to resynchronize the whole to-be-processed data set, thereby improving the synchronization efficiency.

There exists a problem that a plug-in cannot implement breakpoint resume in the offline synchronization. For example, in a typical relational database, source end data storage in the offline synchronization cannot support location setting, and if there is an error in the middle of reading in the data fragment synchronization, data cannot be easily and conveniently drawn again from the error location for reading. This embodiment employs the task-level failover to draw data from the source again, thereby solving the location problem.

There exists a problem that retry of a plug-in in the offline synchronization does not cover all data. The existing plug-in has a fine retry granularity, and generally a captured abnormality is submitted for a single record or a batch to carry out retry. Because the whole life cycle of the task includes a lot of operation steps, there may be missing points, causing omission of retry. By the application of the task-level failover, a data fragment can be resynchronized, thereby solving the above problem.

By using the task-level failover, the data fragment may be rescheduled to different machines, and a task is reassigned, thereby resuming data synchronization automatically.

It should be noted that, for ease of description, the method embodiment is described as a combination of a series of actions; however, those skilled in the art should know that the embodiment of the present application is not limited to the action order described herein, because some steps may be performed in other orders or simultaneously according to the embodiment of the present application. Next, those skilled in the art should also know that the embodiments described in the specification are all preferred embodiments, and actions involved therein are not necessarily required for the embodiments of the present application.

### Embodiment 3

On the basis of the above embodiment, this embodiment further provides a data synchronization system.

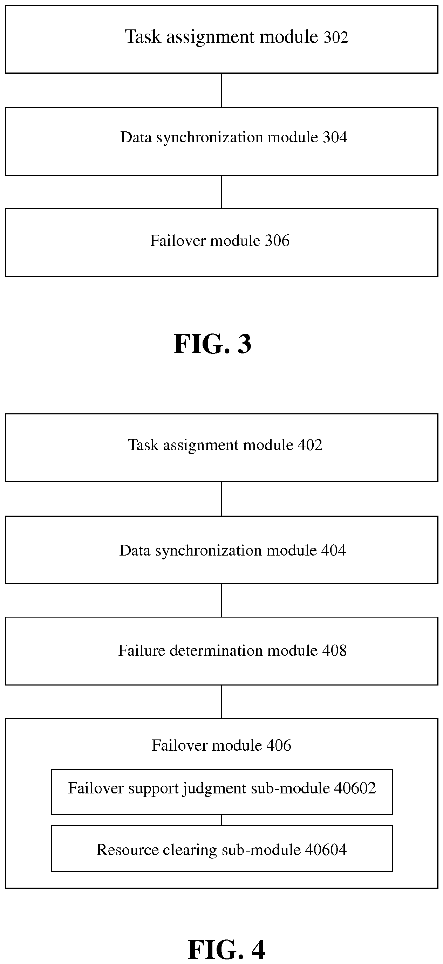

Referring to FIG. 3, a structural block diagram of an embodiment of a data synchronization system of the present application is shown, which may specifically include the following modules:
a task assignment module 302 configured to assign a task for each data fragment in a to-be-processed data set respectively; and reassign a task for a data fragment corresponding to a failed task;
a data synchronization module 304 configured to start a task thread of the task, and execute offline data synchronization of the corresponding data fragment between a source end and a destination end; and start a task thread of the reassigned task to execute offline data synchronization of the data fragment between the source end and the destination end; and
a failover module 306 configured to, after it is judged that a task corresponding to any data fragment is failed in synchronization and if it is determined that the failed task supports a failover operation, clear processing resources of the data fragment corresponding to the failed task; and trigger the task assignment module.

That is, the task assignment module 302 assigns a task for each data fragment of a to-be-processed data set respectively, and then the data synchronization module 304 starts a task thread of the task, and executes offline data synchronization of the corresponding data fragment between a source end and a destination end. If a task corresponding to any data fragment is failed in synchronization, the failover module 306 clears, after it is judged that a task corresponding to any data fragment is failed in synchronization and if it is determined that the failed task supports a failover operation, processing resources of the data fragment corresponding to the failed task; and triggers the task assignment module 302 to reassign a task for the data fragment corresponding to the failed task. The data synchronization module 304 starts a task thread of the reassigned task to execute offline data synchronization of the data fragment between the source end and the destination end. After synchronization of the data fragments is successful, the offline data synchronization of the to-be-processed data set is completed.

In view of the above, a task is assigned for each data fragment of a to-be-processed data set respectively, a task thread of the task is started, and offline data synchronization of the corresponding data fragment is executed between a source end and a destination end. If it is judged that a task corresponding to any data fragment is failed in synchronization and it is determined that the failed task supports a failover operation, that is, task-level failover can be executed, processing resources of the data fragment corresponding to the failed task are cleared, a task is reassigned for the data fragment corresponding to the failed task, and a task thread of the reassigned task is started to execute offline data synchronization of the data fragment between the source end and the destination end. Therefore, the data fragment of the failed task is directly resynchronized, and it is unnecessary to reprocess the whole to-be-processed data set, thereby saving resources and shortening the synchronization time.

Referring to FIG. 4, a structural block diagram of another embodiment of a data synchronization system of the present application is shown, which may specifically include the following modules:
a task assignment module 402 configured to assign a task for each data fragment in a to-be-processed data set respectively; a data synchronization module 404 configured to start a task thread of the task, and execute offline data synchronization of the corresponding data fragment between a source end and a destination end; and a failover module 406 configured to, after it is judged that a task corresponding to any data fragment is failed in synchronization and if it is determined that the failed task supports a failover operation, clear processing resources of the data fragment corresponding to the failed task, and trigger the task assignment module 402 to reassign a task for the data fragment corresponding to the failed task. The data synchronization module 404 is configured to start a task thread of the reassigned task to execute offline data synchronization of the data fragment between the source end and the destination end.

In an optional embodiment of the present application, the failover module 406 includes: a failover support judgment sub-module 40602 and a resource clearing sub-module 40604.

The failover support judgment sub-module 40602 is configured to, when it is judged that a read/write feature of the destination end meets a failover condition, determine that the failed task supports a failover operation. The failover support judgment sub-module 40602 is further configured to, when the read/write feature of the destination end is a temporary synchronization feature or an idempotent feature, judge that the read/write feature of the destination end meets the failover condition, wherein the temporary synchronization feature includes a feature of: writing synchronization data into a temporary region in a synchronization process, and after the synchronization is completed, validating the synchronization data after the synchronization data in the temporary region is moved into a fixed storage region through an operation instruction; and the idempotent feature includes that a data writing operation supports an idempotent operation.

The resource clearing sub-module is configured to carry out resource releasing on the task thread corresponding to the failed task, and delete statistical data of the data fragment corresponding to the failed task. The resource clearing sub-module is configured to clear synchronization data stored in data buffers corresponding to the read thread and the write thread; and cancel occupation of the read thread and the write thread by the data fragment corresponding to the failed task. The resource clearing sub-module is further configured to stop the task thread from executing offline data synchronization between the source end and the destination end.

In another optional embodiment of the present application, the data synchronization system further includes a failure determination module 408 configured to, when there is any piece of abnormal information, feed back processing failure information, wherein the abnormal information includes: source end abnormal information, destination end abnormal information, network abnormal information, and task thread abnormal information; and judge, according to the processing failure information, that a task corresponding to the abnormal situation is failed in synchronization.

That is, the task assignment module 402 assigns a task for each data fragment of the to-be-processed data set respectively. The data synchronization module 404 starts a task thread of any task, and executes offline data synchronization of the corresponding data fragment between the source end and the destination end. The failure determination module 408 is configured to, when there is any piece of abnormal information, feed back processing failure information, wherein the abnormal information includes: source end abnormal information, destination end abnormal information, network abnormal information, and task thread abnormal information; and judge, according to the processing failure information, that a task corresponding to the abnormal situation is failed in synchronization. The failover module 406 is configured to, after it is judged that a task corresponding to any data fragment is failed in synchronization and if it is determined that the failed task supports a failover operation, clear processing resources of the data fragment corresponding to the failed task; and trigger the task assignment module 402 to reassign a task for the data fragment corresponding to the failed task. The data synchronization module 404 starts a task thread of the reassigned task to execute offline data synchronization of the data fragment between the source end and the destination end.

Therefore, when the task corresponding to the data fragment is failed in processing, after it is determined that the failed task supports failover on the basis of the read/write feature of the destination end, the failover may be executed, that is, a task is reassigned to the data fragment to re-execute the synchronization. Therefore, the task-level failover is executed, and it is unnecessary to resynchronize the whole to-be-processed data set, thereby improving the synchronization efficiency.

There exists a problem that a plug-in cannot implement breakpoint resume in the offline synchronization. For example, in a typical relational database, source end data storage in the offline synchronization cannot support location setting, and if there is an error in the middle of reading in the data fragment synchronization, data cannot be easily and conveniently drawn again from the error location for reading. This embodiment employs the task-level failover to draw data from the source again, thereby solving the location problem.

There exists a problem that retry of a plug-in in the offline synchronization does not cover all data. The existing plug-in has a fine retry granularity, and generally a captured abnormality is submitted for a single record or a batch to carry out retry. Because the whole life cycle of the task includes a lot of operation steps, there may be missing points, causing omission of retry. By the application of the task-level failover, a data fragment can be resynchronized, thereby solving the above problem.

By using the task-level failover, the data fragment may be rescheduled to different machines, and a task is reassigned, thereby resuming data synchronization automatically.

The apparatus embodiment is basically similar to the method embodiment, so it is described simply, and for related parts, reference may be made to the descriptions of the parts in the method embodiment.

The embodiments of this specification are described progressively, each embodiment emphasizes a part different from other embodiments, and identical or similar parts of the embodiments may be obtained with reference to each other.

Those skilled in the art should understand that the embodiments of the embodiments of the present application may be provided as a method, an apparatus, or a computer program product. Therefore, the embodiments of the present application may be implemented as a complete hardware embodiment, a complete software embodiment, or an embodiment combining software and hardware. Moreover, the embodiments of the present application may be a computer program product implemented on one or more computer usable storage media (including, but not limited to, a magnetic disk memory, a CD-ROM, an optical memory, and the like) including computer usable program codes.

In a typical configuration, the computer device includes one or more processors (CPUs), an input/output interface, a network interface, and a memory. The memory may include a computer readable medium such as a volatile memory, a Random Access Memory (RAM) and/or a non-volatile memory, e.g., a Read-Only Memory (ROM) or a flash RAM. The memory is an example of the computer readable medium. The computer readable medium includes non-volatile and volatile media as well as movable and non-movable media, and can implement information storage by means of any method or technology. Information may be a computer readable instruction, a data structure, and a module of a program or other data. An example of the storage medium of a computer includes, but is not limited to, a phase change memory (PRAM), a static random access memory (SRAM), a dynamic random access memory (DRAM), other types of RAMs, a ROM, an electrically erasable programmable read-only memory (EEPROM), a flash memory or other memory technologies, a compact disk read-only memory (CD-ROM), a digital versatile disc (DVD) or other optical storages, a cassette tape, a magnetic tape/magnetic disk storage or other magnetic storage devices, or any other non-transmission medium, and can be used to store information accessible to a computing device. According to the definition herein, the computer readable medium does not include transitory media, such as a modulated data signal and a carrier.

The embodiments of the present application are described with reference to flowcharts and/or block diagrams according to the method, terminal device (system) and computer program product according to the embodiments of the present application. It should be understood that a computer program instruction may be used to implement each process and/or block in the flowcharts and/or block diagrams and combinations of processes and/or blocks in the flowcharts and/or block diagrams. The computer program instructions may be provided to a universal computer, a dedicated computer, an embedded processor or a processor of another programmable data processing terminal device to generate a machine, such that the computer or a processor of another programmable data processing terminal device executes an instruction to generate an apparatus configured to implement functions designated in one or more processes in the flowcharts and/or one or more blocks in the block diagrams.

The computer program instructions may also be stored in a computer readable storage that can instruct a computer or another programmable data processing terminal device to work in a specific manner, such that the instruction stored in the computer readable storage generates an article of manufacture including an instruction apparatus. The instruction apparatus implements a designated function in one or more processes in the flowcharts and/or one or more blocks in the block diagrams.

The computer program instructions may also be loaded in a computer or another programmable data processing terminal device, such that a series of operation steps are executed on the computer or another programmable terminal device to generate computer implemented processing. Therefore, the instructions executed in the computer or another programmable terminal device provide steps for implementing designated functions in one or more processes in the flowcharts and/or one or more blocks in the block diagrams.

Preferred embodiments of the embodiments of the present invention have been described; however, once knowing the basic creative concepts, those skilled in the art can make other variations and modifications to the embodiments. Therefore, the appended claims are intended to be explained as including the preferred embodiments and all variations and modifications falling within the scope of the embodiments of the present application.

Finally, it should be further noted that, in this text, the relation terms such as first and second are merely used to distinguish one entity or operation from another entity or operation, and do not necessarily require or imply that the entities or operations have this actual relation or order. Moreover, the term "include", "comprise" or other variations thereof are intended to cover non-exclusive inclusion, so that a process, a method, an article, or a terminal device including a series of elements not only includes the elements, but also includes other elements not clearly listed, or further includes inherent elements of the process, method, article or terminal device. In a case without any more limitations, an element defined by "including a/an..." does not exclude that the process, method, article or terminal device including the element further has other identical elements.

A data synchronization method and a data synchronization system provided in the present application are described in detail, and the principles and implementations of the present application are described by applying specific examples in this text. The above description on the embodiments is merely used to help understand the method of the present application and core ideas thereof. Meanwhile, for those of ordinary skill in the art, modifications may be made to the specific implementations and application scopes according to the idea of the present application. Therefore, the content of the specification should not be construed as any limitation to the present application.

## Claims

1. A data synchronization method, comprising:
assigning a task for each data fragment in a to-be-processed data set respectively;
starting a task thread of the task, and executing offline data synchronization of the corresponding data fragment between a source end and a destination end;
after it is judged that a task corresponding to any data fragment is failed in synchronization and if it is determined that the failed task supports a failover operation, clearing processing resources of the data fragment corresponding to the failed task; and
reassigning a task for the data fragment corresponding to the failed task, and starting a task thread of the reassigned task to execute offline data synchronization of the data fragment between the source end and the destination end.

2. The method according to claim 1, wherein the determining that the failed task supports a failover operation comprises:
when it is judged that a read/write feature of the destination end meets a failover condition, determining that the failed task supports a failover operation.

3. The method according to claim 2, further comprising:
when the read/write feature of the destination end is a temporary synchronization feature or an idempotent feature, judging that the read/write feature of the destination end meets the failover condition,
wherein the temporary synchronization feature comprises a feature of: writing synchronization data into a temporary region in a synchronization process, and after the synchronization is completed, validating the synchronization data after the synchronization data in the temporary region is moved into a fixed storage region through an operation instruction; and
the idempotent feature comprises that a data writing operation supports an idempotent operation.

4. The method according to claim 1, wherein the clearing processing resources of the data fragment corresponding to the failed task comprises:
releasing resources of the task thread corresponding to the failed task, and deleting statistical data of the data fragment corresponding to the failed task.

5. The method according to claim 4, wherein the task thread comprises a read thread and a write thread; and the releasing resources of the task thread corresponding to the failed task comprises:
clearing synchronization data stored in data buffers corresponding to the read thread and the write thread; and
canceling occupation of the read thread and the write thread by the data fragment corresponding to the failed task.

6. The method according to claim 4, wherein before the clearing processing resources of the data fragment corresponding to the failed task, the method further comprises:
stopping the task thread from executing offline data synchronization between the source end and the destination end.

7. The method according to claim 1, further comprising:
when there is any piece of abnormal information, feeding back processing failure information, wherein the abnormal information comprises: source end abnormal information, destination end abnormal information, network abnormal information, and task thread abnormal information; and
judging, according to the processing failure information, that a task corresponding to the abnormal situation is failed in synchronization.

8. A data synchronization system, comprising:
a task assignment module configured to assign a task for each data fragment in a to-be-processed data set respectively; and reassign a task for a data fragment corresponding to a failed task;
a data synchronization module configured to start a task thread of the task, and execute offline data synchronization of the corresponding data fragment between a source end and a destination end; and start a task thread of the reassigned task to execute offline data synchronization of the data fragment between the source end and the destination end; and
a failover module configured to, after it is judged that a task corresponding to any data fragment is failed in synchronization and if it is determined that the failed task supports a failover operation, clear processing resources of the data fragment corresponding to the failed task; and trigger the task assignment module.

9. The system according to claim 8, wherein the failover module comprises:
a failover support judgment sub-module configured to, when it is judged that a read/write feature of the destination end meets a failover condition, determine that the failed task supports a failover operation.

10. The system according to claim 9, wherein
the failover support judgment sub-module is further configured to, when the read/write feature of the destination end is a temporary synchronization feature or an idempotent feature, judge that the read/write feature of the destination end meets the failover condition, wherein the temporary synchronization feature comprises a feature of: writing synchronization data into a temporary region in a synchronization process, and after the synchronization is completed, validating the synchronization data after the synchronization data in the temporary region is moved into a fixed storage region through an operation instruction; and the idempotent feature comprises that a data writing operation supports an idempotent operation.

11. The system according to claim 8, wherein the failover module comprises:
a resource clearing sub-module configured to release resources of the task thread corresponding to the failed task, and delete statistical data of the data fragment corresponding to the failed task.

12. The system according to claim 11, wherein
the resource clearing sub-module is configured to clear synchronization data stored in data buffers corresponding to the read thread and the write thread; and cancel occupation of the read thread and the write thread by the data fragment corresponding to the failed task.

13. The system according to claim 11, wherein
the resource clearing sub-module is further configured to stop the task thread from executing offline data synchronization between the source end and the destination end.

14. The system according to claim 8, further comprising:
a failure determination module configured to, when there is any piece of abnormal information, feed back processing failure information, wherein the abnormal information comprises: source end abnormal information, destination end abnormal information, network abnormal information, and task thread abnormal information; and judge, according to the processing failure information, that a task corresponding to the abnormal situation is failed in synchronization.
